# EUROPEAN PATENT SPECIFICATION

(11) **EP 4 250 037 B1**
(45) Date of publication and mention of the grant of the patent: **12.03.2025**
(21) Application number: 23163083.1
(22) Date of filing: 21.03.2023
(51) Int. Cl.: G05B 23/02, G01M 13/045, H04W 72/12

(54) **END-TO-END WIRELESS SENSOR-HUB SYSTEM**
DRAHTLOSES SENSOR-HUB-SYSTEM ZWISCHEN ENDPUNKTEN
SYSTÈME DE CONCENTRATEUR-CAPTEUR SANS FIL BOUT À BOUT

(30) Priority: 21.03.2022 US 202263322055 P
(43) Date of publication of application: 27.09.2023
(73) Proprietor: Delaware Capital Formation, Inc., Wilmington, Delaware 19809 (US)
(72) Inventor: DEV, Bodhayan, Sturbridge, MA 01560 (US); KAMBLE, Atish P., Acton, MA 01720 (US); SWAROOP, Prem, Lexington, MA 02421 (US); BASKAR, Vijay Karthick, Waltham, MA 02452 (US); BUTEAU, Richard, Austin, TX 1538 (US); PATNALA, Sreedhar, Holliston, MA 01746 (US)
(74) Representative: Fish & Richardson P.C.

(56) References cited:
- CN-A- 109 640 283
- US-A1- 2008 211 666
- US-A1- 2014 274 181
- US-A1- 2020 379 442
- ARORA (RESEARCH SCHOLAR) VISHAL KUMAR ET AL: "A survey on LEACH and other's routing protocols in wireless sensor network", OPTIK, WISSENSCHAFTLICHE VERLAG GMBH, DE, vol. 127, no. 16, 26 April 2016 (2016-04-26), pages 6590 - 6600, XP029544100, ISSN: 0030-4026, DOI: 10.1016/J.IJLEO.2016.04.041
- WIKIPEDIA: "Wireless sensor network", 18 November 2019 (2019-11-18), XP055718451, Retrieved from the Internet <URL:https://en.wikipedia.org/w/index.php?title=Wireless_sensor_network&oldid=926811057> [retrieved on 20200727]

## Description

### CROSS REFERENCE TO RELATED APPLICATIONS

The present application claims the priority of US Provisional Patent Application No. 63/322,055 filed on March 21, 2022, entitled "End-to-End Wireless Sensor-Hub System".

### BACKGROUND

Sensors can be used to capture data associated with industrial equipment. Industrial equipment includes machines used in manufacturing and fabrication. For example, industrial equipment includes but is not limited to pumps, heavy duty industrial tools, compressors, automated assembly equipment, and the like. Industrial equipment also includes machine parts and hardware, such as springs, nuts and bolts, screws, valves, pneumatic hoses, and the like. US 2014/274181 A1 describes a field device assembly comprising a first process sensor, a wireless transceiver, and a processor. The first process sensor is disposed to sense a first process parameter. The wireless transceiver is configured to communicate wirelessly with a network manager. The processor is configured to process the sensed first process parameter, and to command the wireless transceiver and first process sensor to perform a first resource-intensive activity according to a first commissioned adaptive schedule whereby rates of the resource-intensive activity vary over time and/or based on sensed events.
CN 109 640 283 A describes a low power consumption wireless sensor network design method based on the self-powered technology.
V. K. Arora et al.: A survey on LEACH and other's routing protocols in wireless sensor network, OPTIK, WISSENSCHAFTLICHER VERLAG GMBH, DE, vol. 127, no. 16, April 26, 2016, pp. 6590-6600, describes that diverse hierarchical routing protocols, developed from LEACH are assessed and are extended to other routing protocols like TEEN, APTEEN, and PEGASIS.
US 2020/379442 A1 describes that computer-based process modeling and simulation methods and systems combine first principles models and machine learning models to benefit where either model is lacking.
Wikipedia: "Wireless sensor network", November 18, 2019, Retrieved from the Internet: URL: https://en.wikipedia.org/w/index.php?title=Wireless sensor network&oldid=926811057 describes a wireless sensor network as a group of spatially dispersed and dedicated sensors for monitoring and recording the physical conditions of the environment and organizing the collected data at a central location.
US 2008/211666 A1 describes a method and apparatus that allocates bandwidth among wireless sensor nodes in wireless sensor groups in a wireless sensor network.

### SUMMARY

The invention is defined by the features of the independent claims. Preferred embodiments are defined by the sub-features of the dependent claims.
In general, one or more aspects of the subject matter described in this specification can be embodied in one or more methods or systems.

A system includes one or more sensor-hubs physically coupled with industrial equipment, the industrial equipment being at an operational site. Each of the one or more sensor-hubs includes a controller and one or more sensors. At least one sensor hub is located adjacent to a component of the industrial equipment that is a source of sensor data, and is configured to capture the sensor data associated with the industrial equipment. The system includes at least one processor at the operational site, the at least one processor being communicatively coupled with the sensor hubs via a network that provides integrated support for secure, wireless transmission of the sensor data at the operational site. The one or more sensor hubs are sequenced to transmit data across the network according to a current group number.

A method includes configuring sensor hubs in an order using a sequence established by a time of addition to a network. The method includes configuring the sensor hubs into one or more groups, wherein a number of sensor hubs in a respective group is calculated according to a maximum bandwidth consumed by a group of sensor hubs, wherein the maximum bandwidth does not exceed a data bandwidth of the network. Additionally, the method includes obtaining sensor data captured by the one or more groups according to a current group number, wherein the sensor data is obtained from each group of the one or more groups according to a predetermined schedule.

### BRIEF DESCRIPTION OF THE DRAWINGS

Figure 1A shows an example of a sensor hub.
Figure 1B is a drawing of a sensor hub.
Figure 2 is a block diagram of a sensor hub implementation.
Figure 3A is a block diagram of an edge architecture that includes one or more sensor hubs.
Figure 3B is drawing of a computer numerically controlled machine.
Figure 3C is a drawing of an industrial machine.
Figure 4 shows a process that enables an end-to-end wireless sensor-hub system.
Figure 5 is a block diagram of a system that enables an end-to-end wireless sensor hub system.

### DETAILED DESCRIPTION

Industrial equipment includes any number of components to achieve a predetermined objective, such as the manufacture or fabrication of goods. A sensor hub according to the present systems and techniques captures data associated with industrial equipment and transmits the data as needed. In some examples, the sensor data is used to train one or more machine learning models. In some examples, the sensor data is input to a trained machine learning model to characterize the operation of the industrial equipment.

The present systems and techniques include an end-to-end wireless sensor hub system. One or more sensor-hubs ingest raw sensor data captured by multiple sensors. In some examples, sensor data includes multiple rotating component speeds, system current consumed by operating parts, machine vibration and orientation, operating temperature, and any other suitable characteristics that the industrial equipment can exhibit. In examples, the multiple sensors include sensors that capture current, power, and ambient conditions. The multiple sensors can also include temperature sensors, inertial measurement units (IMUs) and the like. The one or more sensor hubs are physically coupled with industrial equipment, including but not limited to pumps, heavy duty industrial tools, compressors, automated assembly equipment, and the like. The industrial equipment can further include machines such as turning machines (e.g., lathes and boring mills), shapers and planers, drilling machines, milling machines, grinding machines, power saws, cutting machines, stamping machines, and presses.

In some examples, the sensor data is captured by one or more sensors of a sensor hub and sensor data is transmitted to condition monitoring applications for predictive maintenance of the industrial equipment, e.g., predictive maintenance of actuators used in the transportation sector, such as for fleet management for fuel tank systems, motion platforms, automation systems used in garbage trucks, etc. In some examples, a respective mounting position of each sensor-hub on the industrial equipment is determined by a series of trials that characterize various 'anomalous conditions' that occur throughout the lifetime of use of the equipment. The sensor data collected during these trials can be used to train machine learning models. Some mounting positions capture sensor data that do not accurately characterize operation of the industrial equipment. In particular, some mounting positions fail to capture data that enables a machine learning model to characterize the operation of the industrial equipment due to being remote from the source of sensor data. The mounting positions that fail to capture sensor data that characterizes operation of the industrial equipment are not used.

Once suitably positioned, the sensor-hubs can transfer captured raw sensor data using a low-power wireless personal area network with secure mesh based communication technology. The network can include one or more router nodes, terminating at an internet of things (IoT) edge device. In some examples, the network enables communications according to an Internet Protocol version 6 (IPv6) communications protocol. In particular, the communications protocol used enables wireless connectivity at lower data rates. In some examples, the communications protocol used across the network is an IPv6 over Low-Power Wireless Personal Area Networks (6LoWPAN). The sensor data is ingested into a workflow and one or more trained machine learning models learn from the sensor data for continuous improvement. In some examples, the trained machine learning model(s) are deployed onto edge or cloud devices. In some examples, the edge devices are deployed at an operational site. The sensor hubs enable low power data collection and transmission, thereby conserving power consumption. The mesh network used for data transfer is resilient to failures and handles outages of member nodes.

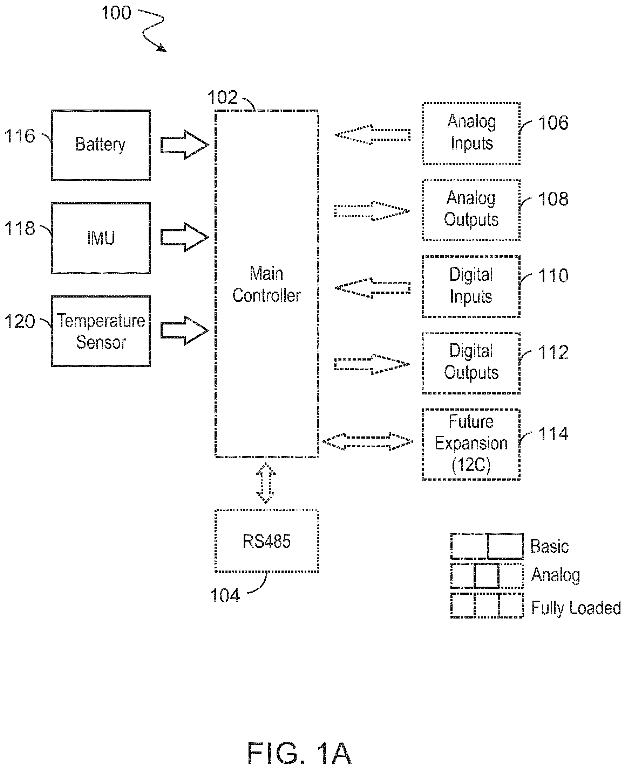

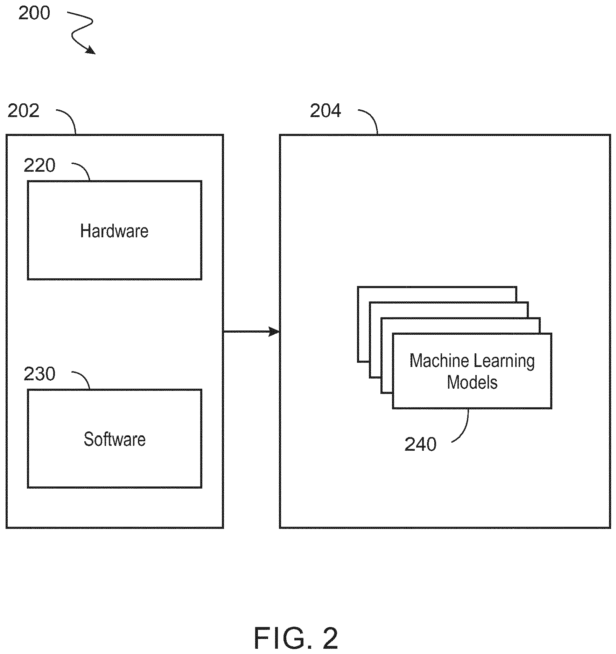

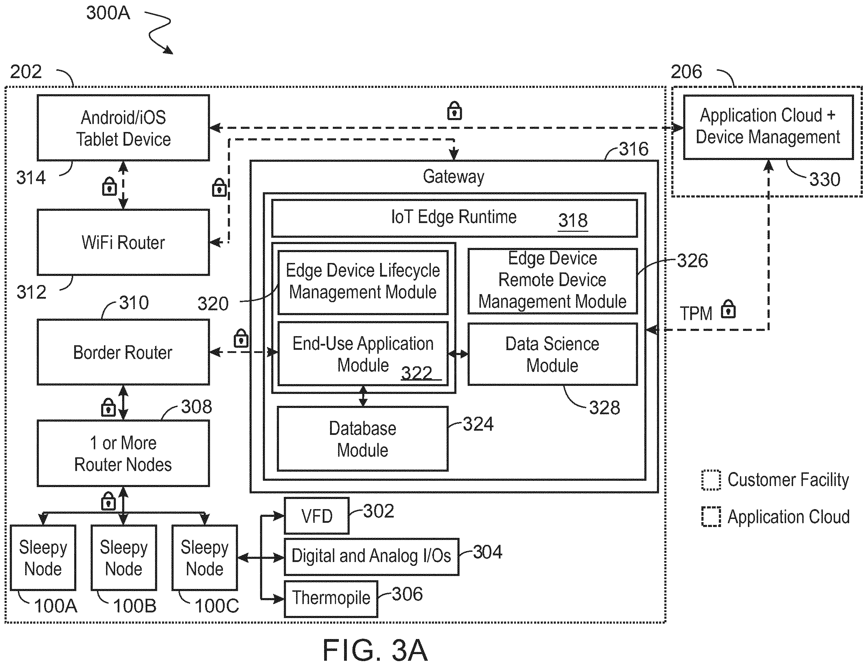

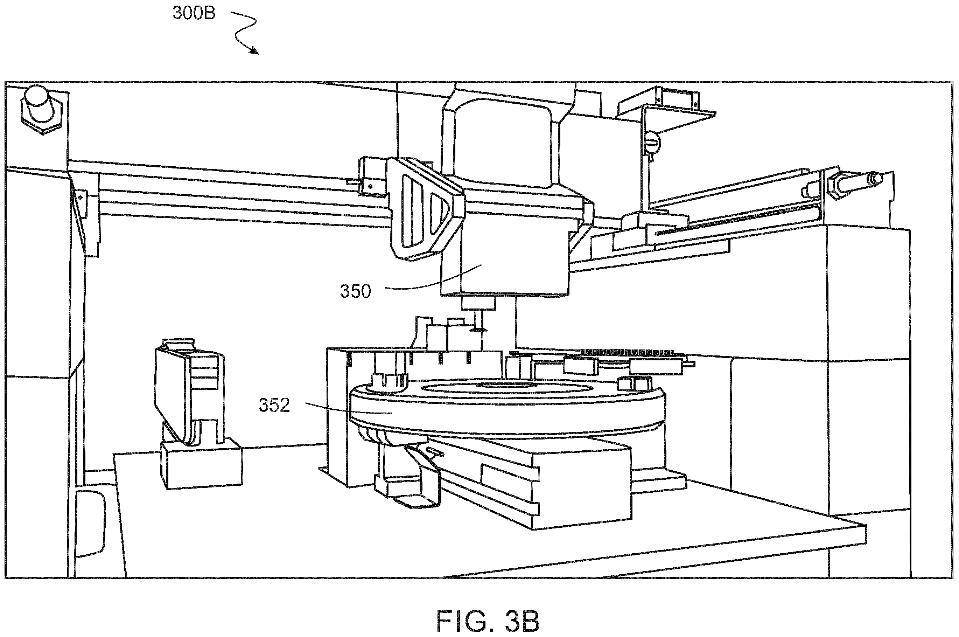

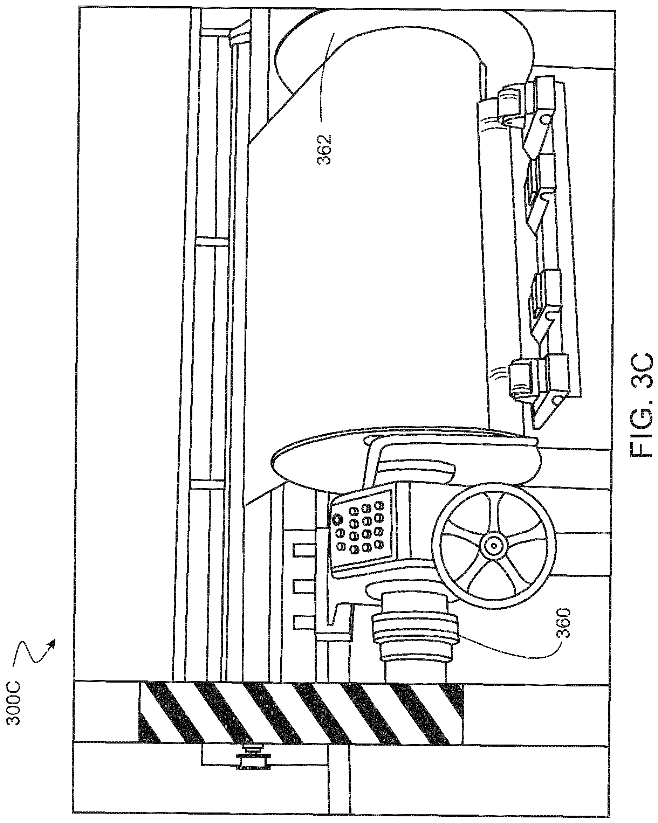

Figure 1A shows an example of a sensor hub 100. The sensor hub 100 captures sensor data that is input to the data flow architecture 200 of Figure 2. A sensor hub 100 corresponds to each of the nodes 100A, 100B, and 100C of the network 300A of Figure 3A, and a sensor hub 100 can be placed at various positions as shown in the example of the computer numerically controlled (CNC) machine 300B of Figure 3B and/or the industrial machine 300C of Figure 3C. Note that the CNC 300B and industrial machine 300C are examples, and the industrial equipment (including the CNC 300B and the industrial machine 300C) can be designed and built to perform a single operation or be designed and built to perform a combination of two or more operations. In any case, the industrial equipment can perform one or more operations that generate multiple functional parameters that can be understood by a trained machine learning algorithm through the use of various data inputs, as described in this specification. Two or more sensor hubs 100 are coupled with the industrial equipment.

In the example of Figure 1A, the sensor hub 100 includes a controller 102. The controller 102 includes one or more processing cores and memory. In some examples, the controller 102 is a system on a chip (SoC). As shown, the controller 102 is a mixed signal controller that integrates both analog and digital inputs. Analog inputs 106 are provided to the controller 102. The controller 102 outputs analog outputs 108. Similarly, the controller 102 receives digital inputs 110. The controller 102 outputs digital outputs 112. The controller 102 also communicates via a serial RS-485 interface 104. Additionally, the controller 102 includes future expansion 114. In some examples, the future expansion 114 is an expansion bus. The expansion bus may be for example, an Inter-Integrated Circuit bus (I²C). In some examples, the future expansion 114 enables lower speed peripheral components to be communicatively coupled with the controller 102.

The controller 102 includes or is coupled with a battery 116. In examples, the battery 116 is rechargeable or replaceable. In some examples, the controller 102 is coupled with one or more sensors. In the example of Figure 1A, the sensors include an inertial measurement unit (IMU) 118 and a temperature sensor 120. Although particular sensors 118 and 120 are shown in the example of Figure 1A, any suitable sensor can be included in the sensor hub 100. In some examples, the IMU 118 includes a gyroscope, accelerometer, magnetometer, or any combinations thereof. In operation, the IMU 118 captures accelerations or other movement data associated with the industrial equipment. The temperature sensor 120 captures temperature data associated with the industrial equipment. Other suitable sensors may be, for example pressure, humidity, current, voltage, particle count, flow-rate, level measurement, speed, distance, proximity detection, up-down count, etc.

The controller 102 is communicatively coupled with the interface 104. In the example of Figure 1A, the interface 104 is operable according to an RS-485 standard. RS-485 is a standard defining the electrical characteristics of drivers and receivers for use in serial communications systems. RS-485 specifies the electrical characteristics of a generator and receiver. It does not specify or recommend any communications protocol. In some examples, RS-485 is a transmission standard that uses differential voltages to code transmission data for multipoint, multi-drop LAN systems. The sensor-hub can use the RS-485 interface to communicate directly with equipment like variable frequency drives, programmable logic controllers (PLCs), and other industrial control equipment.

In some examples, the sensor hub includes fewer or additional components than those provided in the example of Figure 1A. In a first example, a sensor hub 100 includes an accelerometer and a temperature sensor, is battery operated, and uses a very-low power design approach. In a second example, an analog-only sensor hub 100 includes an accelerometer and a temperature sensor, is not battery operated, and also enables users to connect multiple external analog sensors, thus extending the capability of the sensor hub 100. In some examples, an analog only sensor hub includes multiple analog outputs and an RS-485 port. In a third example, a fully-loaded sensor hub 100 extends the features of the analog-only sensor hub described in the second example, and additionally enables multiple digital inputs, multiple digital outputs and an expansion bus (I²C).

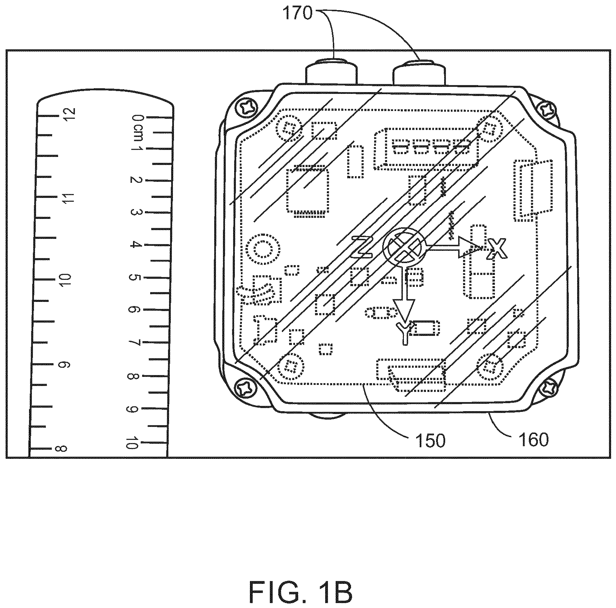

Figure 1B is a drawing of a sensor hub 150. The sensor hub 150 can be, for example, the sensor hub 100 described with respect to Figure 1A. The sensor hub 150 can include components described with respect to the sensor hub 100 in a plastic enclosure 160. The sensor hub 150 and the plastic enclosure 160 are small. In examples, the sensor hub 150 and plastic enclosure 160 are less than or equal to 83 millimeters (mm) x 83 mm x 39 mm for a sensor hub that is fully loaded or an analog-based sensor hub. In examples, the sensor hub 150 and plastic enclosure 160 are less than or equal to 83 mm x 83 mm x 55 mm for a sensor hub that is battery operated. The small size of the sensor hub 150 and plastic enclosure 160 along with the wireless communication of the sensed data facilitates placement of the sensor hub 150 and plastic housing 160 in many different locations on industrial equipment, including hard to reach locations. In some examples, the sensor hub 150 and plastic enclosure are mounted to the industrial equipment using stud mounting or two-pole magnetic mounting, depending on the equipment being monitored. In the example of Figure 1B, IP67 waterproof M12 connectors 170 are shown. In some examples, the IP67 waterproof M12 connectors 170 enable coupling the power supply, analog and digital inputs/outputs, RS485, and I²C with the sensor hub.

Figure 2 is a block diagram of a data flow architecture 200 for sensor hub implementation. In the example of Figure 2, the sensor hubs may be, for example a sensor hub 100 as shown in Figure 1A. An operational site 202 represents a location where industrial equipment is located. For example, the operational site 202 may be that of an organization that owns or operates industrial equipment. Hardware 220 and software 230 are located at the operational site 202. In examples, the hardware 220 includes one or more sensor hubs. Sensor data is captured at the operational site 202 and transmitted to a cloud infrastructure 204.

The cloud infrastructure 204 includes one or more trained machine learning models 240. In some examples, the machine learning models are an ensemble-based model trained to predict an operating condition of the industrial equipment based on sensor data captured during operation of the industrial machinery. Trained machine learning models can also detect model accuracy and data drifts. Additionally, the trained machine learning models are self-learning, where the models are updated based on newly available sensor data. In some embodiments, trained machine learning models are deployed in the cloud infrastructure 204, where the trained machine learning models predict an operating condition of the industrial equipment in an online manner (e.g., with cloud access). In some embodiments, trained machine learning models are deployed at the operational site 202, where the trained machine learning model predicts an operating condition of the industrial equipment in an offline manner (e.g., without access to a cloud infrastructure).

The sensor data is labeled to characterize the subtle differences or trends that appear over a period of use, e.g., over the lifetime of use of the industrial equipment. In some examples, the labels are acquired via periodic polling from control equipment (including PLCs, variable frequency drives (VFDs), pump controllers, refrigeration controllers, building management system (BMS), etc.) for a state associated with the industrial equipment. In some examples, the labels are acquired via manual inputs from the equipment operator(s) (including truck drivers, service technicians, maintenance personnel, shop-floor supervisors, fleet operators, CNC (computer numerically controlled) machine operators, etc.) using the provided user interface running on a portable tablet device (e.g., device 314 of Figure 3). Over a period of time, after collecting several cycles of sensor data from the industrial equipment as it operates and degrades, the machine learning models can be trained using the labeled sensor data. This degradation during operation thus produces "anomalous conditions" that exhibit a physically measurable (using attached sensors) data footprint that is different from the data footprint when the industrial equipment is new, freshly mounted/installed, and configured according to manufacturer specifications. With enough cycles of usage, the machine learning models can distinguish between good sensor data, various levels of degradation, and bad sensor data. In examples, good data includes properly installed pumps running without any cavitation, rotary equipment used in cutting operations that produce the "right" quality of cuts of media being operated on, rotary equipment used in surface-finish operations that produce the "right" surface-finish, etc. In examples, bad data includes improperly installed pumps, pumps running dry over a long time, pumps producing lots of cavitation, rotary equipment used in cutting operations that produce "bad" quality cuts, rotary equipment used in surface-finish operations that produce "bad" quality surface-finish, etc. In some examples, the sensor data is captured across multiple operational sites (e.g., multiple customer installations). In some examples, the data is transmitted from the operational site 202 to the cloud infrastructure 204 according to a secure communication protocol. In some examples, the protocol is the Advanced Message Queuing Protocol (AMQP) or the MQTT protocol according to the OASIS Message Queuing Telemetry Transport Technical Committee.

Figure 3A is a block diagram of an edge architecture operable via a network 300A that includes one or more sensor hubs. In some embodiments, the network 300A is a low power, peer-to-peer, multi-hop wireless network, wherein nodes of the network collectively coordinate routing of frames across the network. The present systems and techniques include a power-optimized sensor hub platform and an end-to-end support ecosystem for machine learning prediction completely offline and at the edge. In some examples, cloud connectivity is optional. In some embodiments, trained machine learning models (e.g., machine learning models 240 of Figure 2) can be deployed at the operational site 202. In particular, the machine learning models are deployed at a device 314 located at the operational site 202. Secure communication pathways are shown in Figure 3A with a lock adjacent to the arrow representing the communication pathway. In examples, secure communication pathways are enabled via a trusted platform module (TPM).

The network 300A includes nodes 100A, 100B, and 100C. Each of the nodes 100A, 100B, and 100C represent a respective sensor hub (e.g., sensor hub 100 and/or sensor hub 150 of Figures 1A and 1B). The sensor hubs are positioned at predetermined locations on or near the industrial equipment. Figure 3B is a drawing of a computer numerically controlled (CNC) machine 300B. Figure 3C is a drawing of an industrial machine 300C. Sensor hubs, such as sensor hubs corresponding to nodes 100A, 100B, and 100C may be placed at predetermined locations with respect to the CNC 300B and industrial machine 300C. The sensor hubs are located adjacent to components of the CNC 300B and industrial machine 300C that are sources of sensor data. In some embodiments, a position and an orientation of the at least one sensor hub enables capture of sensor data associated with the component and avoids attenuation (e.g., reduction in amplitude) of the sensor data due to a distance between the component and the at least one sensor hub. In some examples, installation technicians (e.g., technicians that install sensor hubs at locations on or near the industrial equipment) can utilize the provided commissioning user interface tool (e.g., device 314). The tool can report the quality of the signal dynamically to determine the best mounting position or if signal routers have to be installed between the sensor-hub and the gateway.

In some examples, a source of sensor data is a source of energy that moves or controls a component of the industrial equipment. In the example of Figure 3B, the CNC 300B includes components such as a cutter and a motorized maneuverable platform. Sensor hubs are located at a predetermined location 350 on or near the cutter of the CNC 300B, and a predetermined location 352 on or near a motor of the motorized maneuverable platform of the CNC 300B. The cutter and the motorized maneuverable platform are sources of sensor data that is captured by sensors of one or more sensor hubs. In the example of Figure 3C, the industrial machine 300C includes components such as a motor and a feed roll end. Sensor hubs are located at a predetermined location 360 on or near the motor of the industrial machine 300C, and a predetermined location 362 on the side of the drive shaft opposite to the motor end of the rotor on the industrial machine 300C. The motor and the feed roll end are sources of sensor data that is captured by sensors of one or more sensor hubs.

Referring again to Figure 3A, an operational site 202 and a cloud infrastructure 206 is shown. In some examples, the cloud infrastructure 206 is a Microsoft Azure cloud. In examples, a Modbus Remote Terminal Unit (RTU) protocol is used to for communications with the sensor hub via the RS-485 physical bus (e.g., interface 104 of Figure 1A). The sensor hubs are driven by a variable frequency drive 302. Inputs/outputs 304 correspond to analog inputs 106, analog outputs 108, digital inputs 110, and digital outputs 112 as described with respect to Figure 1A. In examples, inputs/outputs 304 include inputs such as digital inputs (used for on/off type inputs), analog inputs (used for reference inputs like temperature reference, speed reference, etc.), RS485 inputs (used for Modbus RTU communication with PLC, etc.) and I²C input (used for future expansion). In examples, inputs/outputs 304 include digital outputs (used to turn an indication light on/off or start/stop something) and analog outputs (used to provide reference to an externa system, like used to control the speed of a motor, etc.) In an exemplary sensor hub, there are four digital inputs, four analog inputs, one RS-485 input, and one I²C input. The exemplary sensor hub also includes four digital outputs and two analog outputs.

A thermopile 306 is used to capture surface temperature of the media under operation. This surface temperature data is used to train machine learning models. In some examples, the temperature of the media affects the output quality of the process. Media refers to anything that is being operated upon. For example, in a CNC machine, media is a block of metal that needs to be machined. In other examples, such as a pelletizer, media is strands of extruded plastic that needs to be cut to form pellets. In the example of a paper cutter or textile cutter, media is paper and textile respectively.

The nodes 100A, 100B, and 100C capture sensor data associated with industrial equipment and transmit the sensor data using the network 300A. In some examples, the network 300A is an IPv6-based network. In examples, the network 300A is an OpenThread network (e.g., 802.15.4 Thread) that routes data from one or more sensor hubs across the network consisting of one or more router nodes that form the mesh. In examples, the network 300A is a Matter network as provided by the Connectivity Standards Alliance. In examples, the network 300A is a Bluetooth Low Energy (LE) network as provided by the Bluetooth Special Interest Group. In examples, the network 300A is a Bluetooth mesh network as provided by the Bluetooth Special Interest Group. In examples, the network 300A is a Zigbee network as provided by the Connectivity Standards Alliance. In examples, the network 300A is an ANT Network as provided by the ANT+ Alliance. In examples, the network 300A is a proprietary 2.4GHz networking protocol, developed in-house.

In the example of Figure 3A, the network 300A is an IPv6-based, low-power mesh networking technology for IoT devices, and is secure and future-proof. In some examples, the sensor hubs (e.g., sensor hubs 100, 150 of Figures 1A and 1B) are located in a high temperature industrial environment. High temperature may be, for example, up-to 130°C. The low power IP based smart mesh network is operable in the high temperature industrial environment by isolating the electronics (e.g., processor, peripheral silicon devices and networking radio) from a transducer (e.g., device that converts energy to an electric signal) of the sensor hub. The isolation enables the electronics to operate at a reduced temperature at up-to 85°C when compared to the high temperature industrial environment. As described herein, intelligent sequencing enables large data transfer from multiple sensor-hubs. The sensor hubs communicate according to a predefined protocol that enables each sensor hub to participate in the data transmission on the network. Each sensor hub is an endpoint of the network that transmits captured sensor data via one or more router nodes 308 to finally reach the IoT gateway 316. This data can include metrics from sensors such as an accelerometer, temperature sensor, RS-485 (data from variable frequency drives, PLCs, etc.)

The one or more router nodes 308 transmit sensor data captured at the sensor hubs corresponding to nodes 100A, 100B, and 100C. In examples, the network 300A includes multiple types of nodes. For example, a node can be a full thread device (FTD), a minimal thread device (MTD), or any combinations thereof. An FTD includes a radio that is always on, while an MTD includes a radio that is periodically placed in a sleep state. In the example of Figure 3A, the nodes 100A, 100B, and 100C are a type of MTD referred to as a sleepy node. A sleepy node optimizes power consumption by waking up from a sleep mode for a brief amount of time during which it does end-use application specific tasks. Upon completion of the tasks, the sleepy node returns to a sleep state. The longer a node sleeps, the more power is conserved.

The one or more router nodes 308 transmit data to the border router 310. The sensor data is wirelessly transmitted to the router nodes 308, which relay information to the border router 310. The border router 310 translates between the IPV4 network (e.g., the Internet) to which a gateway 316 is connected, and the IPV6 network. Data moving between the nodes 100A, 100B, and 100C and the cloud infrastructure 206 are transmitted through the gateway 316. The border router 310 is positioned at an edge of the network 300A, and in some examples, the border router 310 routes data between the low-power mesh network 300A and an external network, such as the Internet. The border router 310 enables connectivity of nodes on the low-power mesh network 300A to other devices in external networks or to the cloud infrastructure 206. As shown, the border router 310 is communicatively coupled to an IoT gateway 316. The border router 310 transmits sensor data to the IoT gateway 316, and the IoT gateway 316 to the device 314. In examples, the device 314 is a tablet computer, cellular phone, laptop, or other mobile electronic device. In some examples, the device 314 operates using an Android or iOS based operating system. In some examples, a rate of data sampling for each node 100A, 100B, and 100C is configurable via the device 314. The device 314 and gateway 316 are communicatively coupled with the cloud infrastructure 206 via a WiFi router 312. In some examples, the device 314 and gateway 316 communicate with the cloud infrastructure 206 using Long-Term Evolution (LTE) or Wi-Fi communication standard. The cloud infrastructure 206 includes application cloud and device management 330. In some examples, an application cloud is used to display data in a central web dashboard so that an engineer or customer can look at machine trends over time to understand degradation of machine tools. In some examples, device management includes a web application used to manage lifecycle of the IoT devices deployed at customer sites. Management, for example, includes deploying a new device, over-the-air software updates, rebooting an unresponsive device remotely, etc.

In some examples, the gateway 316 is hardware and/or software a program that is a connection point between the cloud infrastructure 206, various controllers, nodes 100A-100C, and other devices on the network 300A. The gateway 316 can execute a software library that enables edge functionality on the network. For example, the gateway 316 can execute a Microsoft IoT Edge runtime (e.g., IoT edge runtime 318), which enables predictive monitoring applications and the associated machine learning models (e.g., machine learning models 240 of Figure 2). The device 314 is connected on the IPV4 network and acts as the user interface to securely onboard and provision new sensor-hubs on the low-power mesh network, add users with Role Based Access Control (RBAC), send configuration updates to the sensor-hubs, send over-the-air update firmware for the sensor-hubs, and manually label data for machine learning model training. In some examples, outputs from the machine learning models are visually indicated via one or more lights (e.g., "traffic" lights) connected to the digital outputs of the sensor hub.

In some examples, the gateway 316 processes the sensor data locally at the edge before transmitting it to the cloud infrastructure 206. For example, the gateway 316 can aggregate or de-duplicate the sensor data as a way of reducing the volume of data that is transmitted to the cloud infrastructure 206. In some examples, the gateway 316 provides security to the network. In the example of Figure 3A, the gateway 316 includes an IoT edge runtime 318, edge device lifecycle management module 320, end-use application module 322, database module 324, edge device remote device management module 326, and data science module 328. In some examples, the IoT edge runtime 318 enables deploying IoT workloads on an IoT gateway. The IoT edge runtime 318 may be, for example, a Microsoft Azure product. In some examples, an edge device lifecycle management module 320 includes a proprietary application that manages the lifecycle of an IoT gateway. Managing the lifecycle of the gateway includes, for example, deploying the gateway from scratch, receiving and processing over-the-air software updates, etc. An end-use application module 322 is a proprietary application that handles data coming in from the sensor hubs. In some examples, the end-use application module 322 transmits data from sensor hubs to the cloud for training machine learning models. The end-use application module 322 also executes the machine learning model to perform predictions on-premise and locally. In some examples, the database module 324 stores data captured by the sensor hubs in a database.

In some examples, the peak data throughput of the low-power networking protocol used for communication between the nodes 100A-100C and the gateway 316 without using any routers between them is 250 kilobits per second (kbps). Large amounts of raw, unprocessed data from multiple sensors on-board each sensor-hub can be captured from multiple such sensor-hubs for training the machine learning models. In some examples, the raw, unprocessed data is captured from multiple sensor hubs for input into trained machine learning models. In some examples, a smart data transfer mechanism assigns a sequence number and a group number to each sensor hub during onboarding. The gateway ensures that at a given point in time, a predetermined number of sensor-hubs are allowed to transfer data while all other sensor-hubs are in a halted mode. Sensor hubs in a halted mode are presumed ready to initiate data transfer upon request. The data transfer mechanism ensures that no single sensor-hub consumes the available bandwidth on the network for an extended period of time. The data transfer mechanism provides each sensor-hub an opportunity to transfer sensor data captured by one or more sensor-hubs at least once per data acquisition cycle. In some examples, the data acquisition cycle is a predetermined time interval. For example, the data acquisition cycle is of a duration that enables capture of sensor data as fast as possible (e.g., in view of hardware and software limitations) which could be one transmission of the entire payload once every five seconds, while collecting as many samples as possible which can be as low as required or can be changed to continuous sampling, and with as high sampling frequency as possible which can be up-to 32 kHZ. Data acquisition cycle balances wireless throughput and sampling time, so that exactly the required amount of data is sampled at the optimal frequency that enables full characterization of the signatures produced by "good" operating conditions vs "bad" operating conditions. This facilitates training of the machine learning model(s), as well as continuous improvement of trained machine learning model(s), and also ensures that the data payload per recording cycle of each sensor-hub is maintained at an optimal level to avoid overwhelming the low-power mesh network.

In some examples, a current group of sensor-hubs is active while the remaining groups of sensors are in a halted mode. If a sensor-hub does not initiate data transfer during its active mode for more than a specified time, for example, thirty seconds, then the gateway can enable an additional time window for the sensor-hub to transmit sensor data captured by one or more sensors of the sensor-hub before which the sensor-hub will lose its chance to transfer data collected in the current recording cycle. Additionally, if the sensor hub enters an offline mode while it is transmitting sensor data as a member of the current group for data transmission, the gateway 316 marks the received data as incomplete and the sensor-hub will get another chance to retry data transmission. After a predetermined number of opportunities to transmit data from the sensor hub, if the sensor-hub is still unresponsive, the data is marked invalid and the user/machine operator is notified via the device 314.

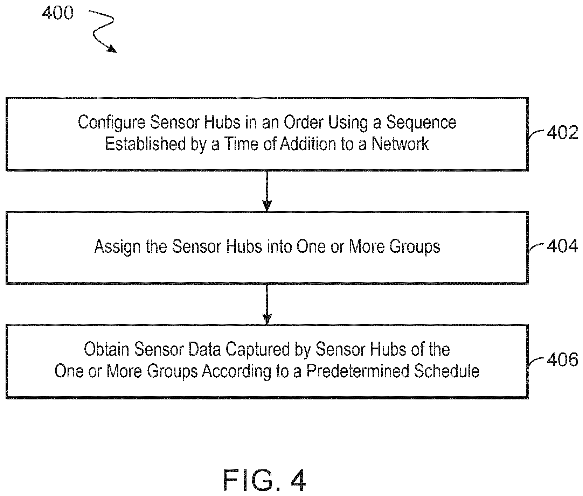

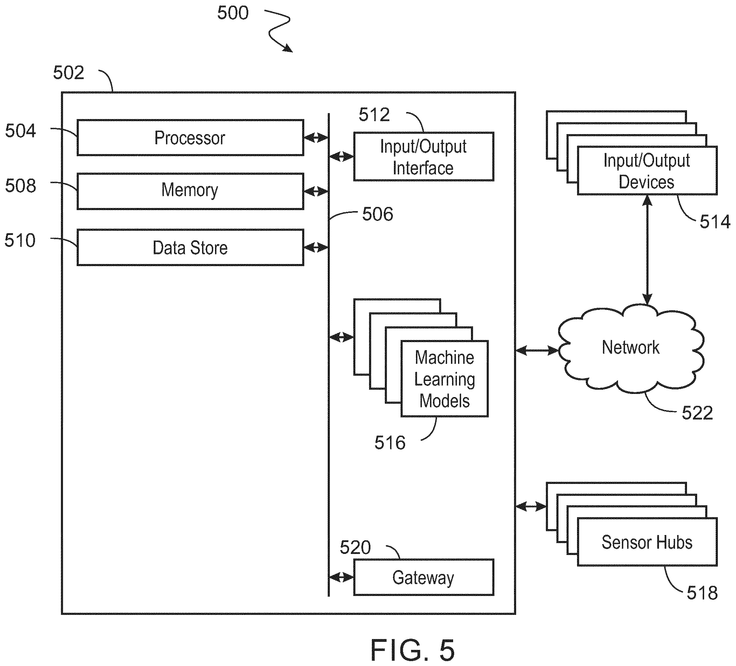

Figure 4 shows a process 400 that enables an end-to-end wireless sensor-hub system. The process 400 is operable using the sensor hub 100 of Figure 1A, sensor hub 150 of Figure 1B, the data flow architecture 200 of Figure 2, and/or the network 300A of Figure 3A. The process 400 can be executed by the system 500 of Figure 5. At block 402, sensor hubs are configured in an order using a sequence established by a time of addition to a network. In some examples, a sequence number is the number assigned to a sensor hub when the sensor hub is initially added to the network (e.g., network 300A of Figure 3A). For example, a first sensor hub added at the earliest time of addition to the network is designated as sensor hub #1, a second sensor hub added at a second earliest time of addition to the network is designated as sensor hub #2, a third sensor hub added at a third earliest time of addition to the network is designated as sensor hub #3, and so on. In some examples, the sequence number is assigned by the network gateway (e.g., gateway 316 of Figure 3A). In some examples, each sensor hub includes analog inputs and outputs, digital inputs and outputs, an internal temperature sensor, flash memory, RS-485, an I²C expansion bus and a trusted platform module (TPM). In some examples, the sensor hub is battery powered. In some examples, the sensor hub is powered by field power supply (DC 24V supply).

At block 404, the sensor hubs are assigned to one or more groups. In some examples, the sensor hubs are assigned to a group by the gateway of the network. A number of sensor hubs in a respective group is calculated according to a maximum bandwidth consumed by a group of sensor hubs, wherein the maximum bandwidth does not exceed a data bandwidth (e.g., throughput at the thread border router) of the network. For example, to avoid multiple sensor hubs sending data simultaneously and creating a bottleneck on the low-power wireless network, the data bandwidth of the network is divided among a number of sensor hubs. The maximum number of sensor hubs that can transmit data simultaneously on the network without causing a bottleneck is the group size. For purposes of example, each group can include three sensor hubs. In this example, sensor hubs assigned sequence numbers #1, #2 and #3, are assigned to group #1. Sensor hubs with sequence numbers #4, #5 and #6 are assigned to group #2. Sensor hubs transmit sensor data when their group number is the current group number as provided by the gateway. Otherwise, the sensor hubs are placed in a halted mode. Other maximum number of sensor hubs per group can also be used, such as a maximum of two or four sensor hubs per group.

At block 406, sensor data (e.g., IMU data (accelerations, orientation), temperature data) captured by sensor hubs of the one or more groups is obtained according to a current group number. The sensor data is obtained from sensor hubs in each group of the one or more groups according to a predetermined schedule. In some examples, a round robin scheduling is used to cycle between sensor hubs by group numbers to obtain sensor data. When a particular group number becomes current, then the sensor hubs within that group start sending data. In some examples, the scheduling is manual scheduling according to a predetermined order.

Each sensor hub added to the network periodically transmits a heartbeat message to the gateway. For example, the time period for transmission of the heartbeat message may be once every five seconds. The gateway communicates with the sensor hubs via a response message to the heartbeat message. The response message may include, for example, commands and statuses such as start data transmission, stop data transmission, firmware update required, and the like. The gateway application cycles between groups of sensor hubs according to the predetermined schedule. When a group is the current group, the sensor hubs assigned to the current group receive a response message that includes a command to initiate sensor data transmission in response to their respective heartbeat message. All other sensor hubs that belong to groups other than the current group receive a halted message (e.g., stop data transmission command) in response to their heartbeat message.

For the current group, the gateway waits for a predetermined time period (e.g., 30 seconds) to receive a heartbeat message from the sensor hubs of the current group. Heartbeat messages are periodically sent by each sensor hub regardless of the assigned group. In examples, the heartbeat messages are sent once every 5 seconds. This prevents a situation where a sensor hub belonging to a particular group goes offline and causes a delay in response, in which case, it does not send the heartbeat message. This also prevents a situation where a sensor hub initiates transmission of sensor data but does not complete the transmission of data. Obtaining sensor data captured by the one or more groups includes transmitting a start data transmission command in response to a heartbeat message received from a current group of sensor hubs.

When the sensor hub is a member of the current group and transmitting data, sensor data can be partitioned into multiple frames to accommodate a maximum transfer unit (MTU) of networking protocol (e.g., Thread protocol). In examples, when the sensor hub includes an accelerometer, 4000 individual accelerometer data points (x, y, z values of acceleration) are sampled. However, transmission of the samples may be constrained by networking protocols. In the example of a Thread protocol, a maximum of 50 samples can be transmitted in one frame without violating the MTU. In some examples, a correlation identification (ID) is assigned to a sensor hub. The correlation ID is a random number that the gateway assigns to each sensor hub the first time the sensor hub is registered on the network. For example, this assignment occurs after every reboot of the sensor hub or gateway application). This correlation ID is appended in each of the frames along with 50 accelerometer data points and sent to the gateway. Every frame which has the same correlation ID is considered to be part of the data that all belongs to the one time instance and is assembled together at the gateway to reconstruct the whole data sample. The order in which the individual frames (including 50 data points) arrive at the gateway does not change. Even if a particular frame is lost, the networking protocol ensures that frames are delivered in-order and at least once. The gateway assembles the frames in-sequence. In examples, if a particular sensor hub is offline for more than a predetermined time interval (e.g., 30 seconds) after beginning a transmission of sensor data, then the gateway will give the sensor hub a second chance to respond (e.g., an additional predetermined time interval of 30 seconds). After that, the gateway can discard the partial data received from the sensor hub, as partial data is generally not useful for analysis.

In examples, sensor hubs transmitting at the same time use the 115.2 kbps throughput of a border router. The network also transmits heartbeat messages and other messages that are internal to the network to ensure proper function of the mesh network. Transmission of sensor data across the network avoids consuming the maximum throughput of the network. For a border router with a maximum throughput of 250 kbps, more than two sensor hubs transmitting data simultaneously clogs the network, and the network failed transmissions may create an avalanche of further failures. In this example, to avoid failed transmissions, groups of sensor hubs are configured such that each group includes two sensor hubs. When a sensor hub is not a member of the current group selected for data transmission across the network, the sensor hub is in a halted mode. In some examples, a halted sensor hub receives a response message from the gateway of "stop data transmission" in response to their heartbeat request. The halted sensor hubs continue to transmit heartbeat messages at predetermined intervals and wait for a start data transmission response from the gateway. A sensor hub will initiate capture of sensor data after receiving a start response message from the gateway. In some examples, a sensor hub is placed in a low power mode when the sensor hub is not actively sampling. For example, after receipt of a "stop data transmission," a sensor hub can enter a low power mode. The low power mode enables the sensor hub to conserve power consumption and extend battery life.

Figure 5 is a block diagram of a system 500 that enables an end-to-end wireless sensor hub system. The system 500 can execute the process 400 of Figure 4. In examples, the system 500 includes, among other equipment, a controller 502. Generally, the controller 502 is small in size and operates with lower processing power, memory and storage when compared to other processors such as GPUs or CPUs. In some examples, the controller 502 consumes very little energy and is efficient. In examples, the controller 502 is a component of (or is) a mobile device, such as a cellular phone, tablet computer, and the like. In some cases, the controller 502 is operable using battery power and is not required to be connected to mains power.

The controller 502 includes a processor 504. The processor 504 can be a microprocessor, a multi-core processor, a multithreaded processor, an ultra-low-voltage processor, an embedded processor, or a virtual processor. In some examples, the processor 504 can be part of a system-on-a-chip (SoC) in which the processor 504 and the other components of the controller 502 are formed into a single integrated electronics package.

The processor 504 can communicate with other components of the controller 502 over a bus 506. The bus 506 can include any number of technologies, such as industry standard architecture (ISA), extended ISA (EISA), peripheral component interconnect (PCI), peripheral component interconnect extended (PCIx), PCI express (PCIe), or any number of other technologies. The bus 506 can be a proprietary bus, for example, used in an SoC based system. Other bus technologies can be used, in addition to, or instead of, the technologies above.

The bus 506 can couple the processor 504 to a memory 508. In some examples, such as in PLCs and other process control units, the memory 508 is integrated with a data storage 510 used for long-term storage of programs and data. The memory 508 can include any number of volatile and nonvolatile memory devices, such as volatile random-access memory (RAM), static random-access memory (SRAM), flash memory, and the like. In smaller devices, such as programmable logic controllers, the memory 508 can include registers associated with the processor itself. The storage 510 is used for the persistent storage of information, such as data, applications, operating systems, and so forth. The storage 510 can be a nonvolatile RAM, a solid-state disk drive, or a flash drive, among others. In some examples, the storage 510 will include a hard disk drive, such as a micro hard disk drive, a regular hard disk drive, or an array of hard disk drives, for example, associated with a distributed computing system or a cloud server.

The bus 506 couples the processor 504 to an input/output interface 512. The input/output interface 512 connects the controller 502 to the input/output devices 514. In some examples, the input/output devices 514 include printers, displays, touch screen displays, keyboards, mice, pointing devices, and the like. In some examples, one or more of the I/O devices 514 can be integrated with the controller 502 into a computer, such as a mobile computing device, e.g., a smartphone or tablet computer.

The controller 502 also includes machine learning models 516. The machine learning models 516 are trained using sensor data captured by one or more sensor hubs 518. Sensor data from the sensor hubs 518 is transmitted to the machine learning models 516 using a gateway 520. The gateway 520 enables the controller 502 to transmit and receive information across a network 522. Although not shown in the interests of simplicity, several similar controllers 502 can be connected to the network 522.

Although exemplary processing systems have been described, implementations of the subject matter and the functional operations described above can be implemented in other types of digital electronic circuitry, or in computer software, firmware, or hardware, including the structures disclosed in this specification and their structural equivalents, or in combinations of one or more of them. Implementations of the subject matter described in this specification, such as control of a data generation, model training, and model execution can be implemented as one or more computer program products, i.e., one or more modules of computer program instructions encoded on a tangible program carrier, for example a computer-readable medium, for execution by, or to control the operation of, a processing system. The computer readable medium can be a machine readable storage device, a machine readable storage substrate, a memory device, or a combination of one or more of them.

The term "system" may encompass all apparatus, devices, and machines for processing data, including by way of example a programmable processor, a computer, or multiple processors or computers. A processing system can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, executable logic, or code) can be written in any form of programming language, including compiled or interpreted languages, or declarative or procedural languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

Computer readable media suitable for storing computer program instructions and data include all forms of non-volatile or volatile memory, media and memory devices, including by way of example semiconductor memory devices, e.g., EPROM, EEPROM, and flash memory devices; magnetic disks, e.g., internal hard disks or removable disks or magnetic tapes; magneto optical disks; and CD-ROM, DVD-ROM, and Blu-Ray disks. The processor and the memory can be supplemented by, or incorporated in, special purpose logic circuitry. Sometimes a server is a general purpose computer, and sometimes it is a custom-tailored special purpose electronic device, and sometimes it is a combination of these things. Implementations can include a back end component, e.g., a data server, or a middleware component, e.g., an application server, or a front end component, e.g., a client computer having a graphical user interface or a Web browser through which a user can interact with an implementation of the subject matter described is this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

A number of embodiments of the invention have been described. Nevertheless, it will be understood that various modifications may be made without departing from scope of the invention. In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as may be needed, to affect the communication.

## Claims

1. A system (500), comprising:
sensor-hubs (518) physically coupled with industrial equipment (300B, 300C), the industrial equipment (300B, 300C) being at an operational site; and
each of the sensor-hubs (518) comprising a controller (102) and one or more sensors (118, 120), wherein at least one of said sensor-hubs (518) is located adjacent to a component of the industrial equipment (300B, 300C) that is a source of sensor data, and is configured to capture the sensor data associated with the industrial equipment (300B, 300C); wherein
the sensor-hubs (518) are configured in an order using a sequence established by a time of addition to a network (522), the network (522) providing integrated support for secure, wireless transmission of the sensor data at the operational site;
the sensor hubs (518) are assigned into one or more groups and each sensor hub is assigned a group number, wherein a number of sensor hubs (518) in a respective group is calculated according to a maximum bandwidth consumed by a group of sensor hubs (518), wherein the maximum bandwidth does not exceed a data bandwidth of the network (522); and
at least one processor (504) at the operational site, the at least one processor (504) being communicatively coupled with the sensor hubs (518) via the network (522), wherein the sensor hubs (518) are sequenced to transmit data across the network (522) according to a current group number.

2. The system of claim 1, wherein a position and an orientation of the at least one sensor hub enables capture of sensor data associated with the component and avoids attenuation of the sensor data due to a distance between the component and the at least one sensor hub.

3. The system of claim 1, comprising a trained machine learning model deployed at the operational site, wherein the trained machine learning model predicts an operating condition of the industrial equipment in an offline manner.

4. The system of claim 1, comprising a trained machine learning model deployed in a cloud infrastructure, wherein the trained machine learning model predicts an operating condition of the industrial equipment in an online manner.

5. The system of claim 1, wherein the network is a low power, peer-to-peer, multi-hop wireless network, wherein nodes of the network collectively coordinate routing of frames across the network.

6. A method (400), comprising:
configuring (402), by at least one processor (504), sensor hubs (518) in an order using a sequence established by a time of addition to a network (522) that provides integrated support for secure, wireless transmission;
assigning (404), by the at least one processor (504), the sensor hubs (518) into one or more groups and assigning a group number to each sensor hub (518), wherein a number of sensor hubs (518) in a respective group is calculated according to a maximum bandwidth consumed by a group of sensor hubs (518), wherein the maximum bandwidth does not exceed a data bandwidth of the network (522); and
obtaining (406), by the at least one processor (504), sensor data captured by the one or more groups by sequencing the sensor hubs (518) according to a current group number.

7. The method of claim 6, wherein obtaining sensor data captured by the one or more groups comprises transmitting a start data transmission command in response to a heartbeat message received from a current group of sensor hubs.

8. The method of claim 7, comprising transmitting a stop data transmission command to place the current group of sensor hubs in a halted mode.

## Patentansprüche

1. System (500), das Folgendes umfasst:
Sensorknotenpunkte (518), die an eine Industrieanlage (300B, 300C) physisch gekoppelt sind, wobei sich die Industrieanlage (300B, 300C) an einem Betriebsort befindet; wobei
jeder der Sensorknotenpunkte (518) eine Steuereinheit (102) und einen oder mehrere Sensoren (118, 120) umfasst, wobei mindestens einer der Sensorknotenpunkte (518) zu einer Komponente der Industrieanlage (300B, 300C), die eine Quelle von Sensordaten ist, benachbart angeordnet ist und ausgelegt ist, die Sensordaten aufzunehmen, die der Industrieanlage (300B, 300C) zugeordnet sind;
die Sensorknotenpunkte (518) in einer Reihenfolge ausgelegt sind, die eine Abfolge verwendet, die durch eine Zeit des Hinzufügens zu einem Netz (522) festgelegt wird, wobei das Netz (522) eine integrierte Unterstützung für eine sichere drahtlose Übertragung der Sensordaten am Betriebsort bereitstellt; und
die Sensorknotenpunkte (518) zu einer oder mehreren Gruppen zugewiesen sind und jedem Sensorknotenpunkt eine Gruppennummer zugewiesen ist, wobei eine Anzahl von Sensorknotenpunkten (518) in einer jeweiligen Gruppe gemäß einer maximalen Bandbreite berechnet wird, die durch eine Gruppe Sensorknotenpunkte (518) verbraucht wird, und die maximale Bandbreite eine Datenbandbreite des Netzes (522) nicht überschreitet; und
mindestens einen Prozessor (504) an dem Betriebsort, wobei der mindestens ein Prozessor (504) mittels des Netzes (522) an die Sensorknotenpunkte (518) kommunikationstechnisch gekoppelt ist und die Sensorknotenpunkte (518) in eine Reihenfolge gebracht werden, um Daten gemäß einer aktuellen Gruppennummer über das Netz (522) zu übertragen.

2. System nach Anspruch 1, wobei eine Position und eine Orientierung des mindestens einen Sensorknotenpunkts eine Aufnahme von Sensordaten, die der Komponente zugeordnet sind, ermöglicht und eine Dämpfung der Sensordaten aufgrund einer Entfernung zwischen der Komponente und dem mindestens einen Sensorknotenpunkt vermeidet.

3. System nach Anspruch 1, das ein trainiertes Modell für maschinelles Lernen umfasst, das beim Betriebsort eingesetzt wird, wobei das trainierte Modell für maschinelles Lernen einen Betriebszustand der Industrieanlage in einer Offline-Weise vorhersagt.

4. System nach Anspruch 1, das ein trainiertes Modell für maschinelles Lernen umfasst, das in einer Cloud-Infrastruktur eingesetzt wird, wobei das trainierte Modell für maschinelles Lernen einen Betriebszustand der Industrieanlage in einer Online-Weise vorhersagt.

5. System nach Anspruch 1, wobei das Netz ein Niedrigleistungs-Peer-to-Peer-Mehrteilstreckendrahtlosnetz ist und Knoten des Netzes die Leitungsführung von Rahmen über das Netz gemeinsam koordinieren.

6. Verfahren (400), das Folgendes umfasst:
Auslegen (402) durch mindestens einen Prozessor (504) von Sensorknotenpunkten (518) in einer Reihenfolge unter Verwendung einer Abfolge, die durch eine Zeit des Hinzufügens zu einem Netz (522), das eine integrierte Unterstützung für eine sichere drahtlose Übertragung bereitstellt, festgelegt wird;
Zuweisen (404) durch den mindestens einen Prozessor (504) der Sensorknotenpunkte (518) zu einer oder mehreren Gruppen und Zuweisen einer Gruppennummer zu jedem Sensorknotenpunkt (518), wobei eine Anzahl von Sensorknotenpunkten (518) in einer jeweiligen Gruppe gemäß einer maximalen Bandbreite berechnet wird, die durch eine Gruppe Sensorknotenpunkte (518) verbraucht wird, und die maximale Bandbreite eine Datenbandbreite des Netzes (522) nicht überschreitet; und
Erhalten (406) durch den mindestens einen Prozessor (504) von Sensordaten, die durch die eine oder die mehreren Gruppen aufgenommen werden, durch Bringen der Sensorknotenpunkte (518) in eine Reihenfolge entsprechend einer aktuellen Gruppennummer.

7. Verfahren nach Anspruch 6, wobei das Erhalten von Sensordaten, die durch die eine oder die mehreren Gruppen aufgenommen werden, ein Senden einer Datenübertragungsstartanweisung in Reaktion auf eine Herzschlagnachricht, die von einer aktuellen Gruppe Sensorknotenpunkte empfangen wurde, umfasst.

8. Verfahren nach Anspruch 7, das ein Senden einer Datenübertragungsstoppanweisung umfasst, um die aktuelle Gruppe Sensorknotenpunkte in einen gestoppten Modus zu versetzen.

## Revendications

1. Système (500), comprenant :
des hubs (518) de capteurs couplés physiquement à un équipement industriel (300B, 300C), l'équipement industriel (300B, 300C) se trouvant sur un site opérationnel ; et
chacun des hubs (518) de capteurs comprenant un contrôleur (102) et un ou plusieurs capteurs (118, 120), au moins un desdits hubs (518) de capteurs étant situé de façon adjacente à un composant de l'équipement industriel (300B, 300C) constituant une source de données capteurs, et étant configuré pour capturer les données capteurs associées à l'équipement industriel (300B, 300C) ;
les hubs (518) de capteurs étant configurés selon un ordre en utilisant une séquence établie par un temps d'ajout à un réseau (522), le réseau (522) assurant une prise en charge intégrée de la transmission sans fil sécurisée des données capteurs sur le site opérationnel ;
les hubs (518) de capteurs étant affectés à un ou plusieurs groupes et chaque hub de capteurs se voyant affecter un numéro de groupe, un nombre de hubs (518) de capteurs dans un groupe respectif étant calculé selon une bande passante maximale consommée par un groupe de hubs (518) de capteurs, la bande passante maximale ne dépassant pas une bande passante de données du réseau (522) ; et
au moins un processeur (504) sur le site opérationnel, l'au moins un processeur (504) étant couplé en communication aux hubs (518) de capteurs via le réseau (522), les hubs (518) de capteurs étant séquencés pour transmettre des données sur le réseau (522) selon un numéro de groupe actuel.

2. Système selon la revendication 1, une position et une orientation de l'au moins un hub de capteurs permettant la capture de données capteurs associées au composant et évitant l'atténuation des données capteurs due à une distance entre le composant et l'au moins un hub de capteurs.

3. Système selon la revendication 1, comprenant un modèle d'apprentissage machine entraîné déployé sur le site opérationnel, le modèle d'apprentissage machine entraîné prédisant un état de fonctionnement de l'équipement industriel dans un mode hors ligne.

4. Système selon la revendication 1, comprenant un modèle d'apprentissage machine entraîné déployé dans une infrastructure dans le cloud, le modèle d'apprentissage machine entraîné prédisant un état de fonctionnement de l'équipement industriel dans un mode en ligne.

5. Système selon la revendication 1, le réseau étant un réseau pair à pair sans fil à bonds multiples de faible puissance, des nœuds du réseau coordonnant collectivement le routage de trames à travers le réseau.

6. Procédé (400), comprenant :
la configuration (402), par au moins un processeur (504), de hubs (518) de capteurs selon un ordre en utilisant une séquence établie par un temps d'ajout à un réseau (522) qui assure une prise en charge intégrée de la transmission sans fil sécurisée ;
l'affectation (404), par l'au moins un processeur (504), des hubs (518) de capteurs à un ou plusieurs groupes et l'affectation à chaque hub (518) de capteurs d'un numéro de groupe, un nombre de hubs (518) de capteurs dans un groupe respectif étant calculé selon une bande passante maximale consommée par un groupe de hubs (518) de capteurs, la bande passante maximale ne dépassant pas une bande passante de données du réseau (522) ; et
l'obtention (406), par l'au moins un processeur (504), de données capteurs capturées par les un ou plusieurs groupes par séquencement des hubs (518) de capteurs selon un numéro de groupe actuel.

7. Procédé selon la revendication 6, l'obtention de données capteurs capturées par les un ou plusieurs groupes comprenant la transmission d'une commande de début de transmission de données en réponse à un message de pulsation reçu depuis un groupe actuel de hubs de capteurs.

8. Procédé selon la revendication 7, comprenant la transmission d'une commande de fin de transmission de données pour placer le groupe actuel de hubs de capteurs dans un mode suspendu.
